# EUROPEAN PATENT SPECIFICATION

(11) **EP 3 155 856 B1**
(45) Date of publication and mention of the grant of the patent: **11.12.2019**
(21) Application number: 14734948.4
(22) Date of filing: 10.06.2014
(51) Int. Cl.: H04W 74/04, H04W 74/08

(54) **METHODS AND APPARATUS FOR RANDOM ACCESS**
VERFAHREN UND VORRICHTUNG FÜR DIREKTZUGRIFF
PROCÉDÉS ET APPAREIL D'ACCÈS ALÉATOIRE

(43) Date of publication of application: 19.04.2017
(73) Proprietor: Telefonaktiebolaget LM Ericsson (publ), 164 83 Stockholm (SE)
(72) Inventor: RUNE, Johan, SE-181 29 Lidingö (SE); ERIKSSON, Erik, SE-58593 Linköping (SE)
(74) Representative: Zacco Sweden AB
(86) International application number: PCT/SE2014/050704
(87) International publication number: WO 2015/190959

(56) References cited:
- EP-A1- 2 190 251
- US-A1- 2014 126 460
- AROUK OSAMA ET AL: "On improving the group paging method for machine-type-communications", 2014 IEEE INTERNATIONAL CONFERENCE ON COMMUNICATIONS (ICC), IEEE, 10 June 2014 (2014-06-10), pages 484-489, XP032632151, DOI: 10.1109/ICC.2014.6883365 [retrieved on 2014-08-26]
- ZTE ET AL: "RACH procedure considering special subframe", 3GPP DRAFT; R2-123391 RACH PROCEDURE CONSIDERING SPECIAL SUBFRAME, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. RAN WG2, no. Qingdao, China; 20120813 - 20120817 6 August 2012 (2012-08-06), XP050665295, Retrieved from the Internet: URL:http://www.3gpp.org/ftp/tsg_ran/WG2_RL 2/TSGR2_79/Docs/ [retrieved on 2012-08-06]
- ASUSTEK: "Issues related to RACH Access", 3GPP DRAFT; R2-072153, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Kobe, Japan; 20070515, 15 May 2007 (2007-05-15), XP050135008, [retrieved on 2007-05-15]

## Description

### TECHNICAL FIELD

The disclosure relates to random access, and more specifically to a radio network node, a wireless device and a core network node, as well as to methods for enabling random access of a wireless device.

### BACKGROUND

3GPP Long Term Evolution (LTE) is the fourth-generation mobile communication technologies standard developed within the 3^{rd} Generation Partnership Project (3GPP) to improve the Universal Mobile Telecommunication System (UMTS) standard to cope with future requirements in terms of improved services such as higher data rates, improved efficiency, and lowered costs. The Universal Terrestrial Radio Access Network (UTRAN) is the radio access network of a UMTS and Evolved UTRAN (E-UTRAN) is the radio access network of an LTE system. In an E-UTRAN, a User Equipment (UE) is wirelessly connected to a Radio Base Station (RBS) commonly referred to as an evolved NodeB (eNB or eNodeB) in LTE. An RBS is a general term for a radio network node capable of transmitting radio signals to a UE and receiving signals transmitted by a UE. The eNodeB is a logical node in LTE and the RBS is a typical example of a physical implementation of an eNodeB. A UE may more generally be referred to as a wireless device or a wireless terminal.

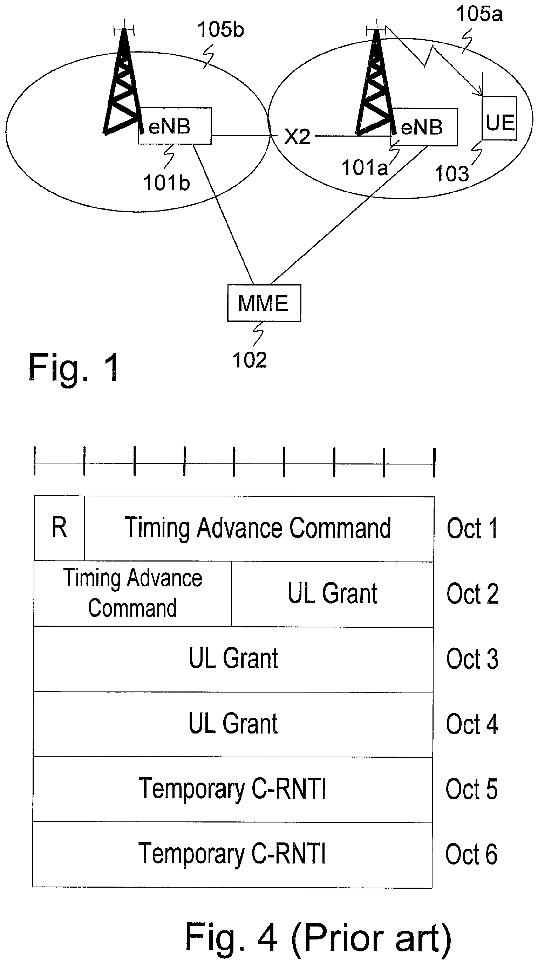

**Figure 1** illustrates a part of an LTE system. In the radio access network an eNodeB 101a serves a UE 103 located within the eNodeB's geographical area of service or the cell 105a. The eNodeB 101a is connected via an X2 interface to a neighboring eNodeB 101b serving another cell 105b. The two eNodeBs 101a and 101b are connected to a core network node called Mobility Management Entity (MME). The core network in LTE is sometimes referred to as Evolved Packet Core (EPC), and the MME is one of the core network nodes in EPC. Together, the E-UTRAN, the EPC and potentially other entities too, such as service related entities, are referred to as the Evolved Packet System (EPS). S1 Application Protocol (AP) provides the signaling service between E-UTRAN and the EPC. The Non-Access Stratum (NAS) protocol is used for the control signaling between the UE and the MME.

In a current vision of the future development of the communication in cellular networks, huge numbers of mostly small autonomous wireless devices become increasingly important. These devices are assumed not to be associated with humans, but are rather sensors or actuators of different kinds, which communicate with application servers within or outside the cellular network. The application servers configure the devices and receive data from them. Hence, this type of communication is often referred to as machine-to-machine (M2M) communication and the devices may be denoted machine devices (MDs). In the 3GPP standardization the corresponding alternative terms are machine type communication (MTC) and MTC devices. The MTC devices are a subset of the more general term UE. In terms of numbers, MTC devices will dominate over human users, but since many of them will communicate very scarcely, their part of the traffic volume will probably be small compared their part of the device population.

With the nature of MTC devices and their assumed typical usage follow that they will often have to be very energy efficient, since external power supplies will often not be available and since it is neither practically nor economically feasible to frequently replace or recharge their batteries. In some scenarios the MTC devices may not even be battery powered, but may instead rely on energy harvesting, i.e. gathering energy from the environment, and opportunistically utilizing the often very limited energy that may be tapped from e.g. sun light, temperature gradients, and vibrations.

For such energy deprived devices the traffic is characterized by small and more or less infrequent transactions that often are delay tolerant. As the transactions or communication events are infrequent, each of them will involve a process of establishing a connection to the network or - in case a connection can be maintained across multiple communication events - at least a Random Access (RA) procedure to synchronize the uplink, i.e. to acquire a valid timing advance. Hence, the behavior of these devices will result in a large, and inevitably energy consuming signaling overhead.

Machine devices, however, consist of a very heterogeneous flora of devices and applications. Although the above described energy deprived devices, according to the vision, may constitute the largest part in terms of numbers, many other types of MTC devices and MTC applications are also envisioned and to some extent already existing. One example that has received quite a lot of attention is the development of power grids into so called "smart grids". This refers to the evolution of the conservative power grid technology into grids that are better adapted to the envisioned future requirements in the area of generation and distribution of electricity. The future requirements involve intermittent generation sources such as wind and solar power plants, many small generation sources such as from customers which sometimes produce more electricity than they consume, and a desire to impact the customers energy consumption habits to even out load peaks. In this evolution, information technology and in particular communication technology has an important role to play. In many smart grid applications, entities in the power grid, so-called substations (e.g. transformer stations) communicate with each other and with a control center for the purpose of automation and protection of equipment when faults occur. In contrast to the above described energy deprived devices with delay tolerant scarce communication, these smart grid applications often have extremely strict latency requirements, the amount of data communicated may range between small and large and the energy supply is typically not an issue. To make cellular communication technology a possible and attractive means of communication for such devices and applications, it is crucial to keep the delay associated with access and end-to-end communication as low as possible.

Although smart grid applications are prime examples of a MD application scenario that requires low access delay, they are not the only ones. MDs are also likely to find many applications in industrial processes, where they may serve purposes such as tuning the process and/or detecting and/or initiating automatic actions upon fault conditions. Also in the latter example, there may be many scenarios where extremely swift reactions are needed in order to avoid that expensive equipment is damaged or that costly restarts of complex processes are needed.

A property that such low delay applications share with the above described energy deprived MTC devices is that they require that the signaling overhead involved in network access is minimized. The current network access signaling procedure, focusing on the RA part, is described hereinafter.

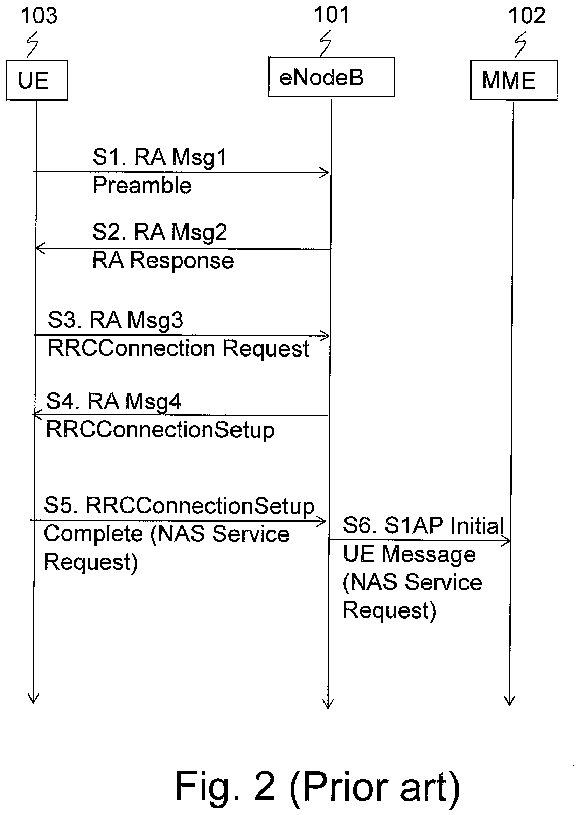

If the concerned device is in RRC_IDLE state, the network access signaling involves a transition to RRC_CONNECTED state. In this case the network access control signaling consists of a RA phase for synchronizing with and gaining initial access to the cellular network and a further phase for authentication, configuring the connection, and establishing appropriate states on higher layers. The connection may e.g. be a Radio Resource Control (RRC) connection, and the establishing of appropriate states on higher layers may e.g. be done through S1AP signaling between the eNodeB and the MME, and NAS signaling between the UE and the MME in EPS. A first part of the network access signaling procedure, involving the RA procedure, is illustrated in the signaling diagram in **Figure 2****.**

The RA procedure consists of the first four messages S1-S4 of the procedure illustrated in **Figure 2****.** The RA messages pertain to the Medium Access Control (MAC) layer. In the case of transition from RRC_IDLE to RRC_CONNECTED state, as in **Figure 2****,** S3 - RA Msg3 and S4 - RA Msg4 also carry RRC layer messages between the UE and the eNodeB. The most elaborate of the RA messages is S2 - RA Msg2, denoted RA Response (RAR). The format of the MAC Packet Data Unit (PDU) for a RAR (RAR PDU) is illustrated in **Figure 3** and **Figure 4****.**

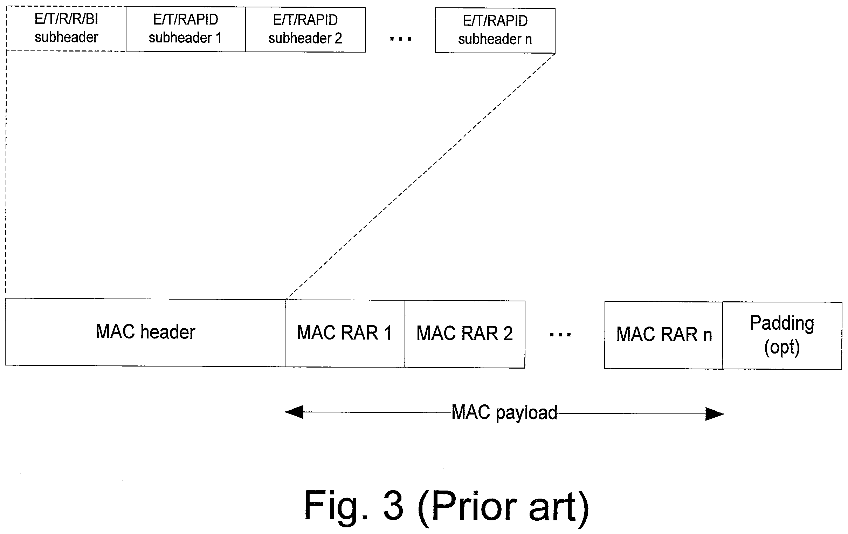

In **Figure 3****,** BI is the optional Backoff Indicator, RAPID is the RA Preamble Identity (ID) indicating the RA preamble transmission that the corresponding MAC RAR pertains to, E is the Extension flag indicating whether there are more subheaders in the MAC header, T is the Type flag indicating whether the subheader comprises a BI or a RAPID, the two R fields in the optional BI subheader are reserved bits set to zero by the sending eNodeB and ignored by the receiving UE, and MAC RAR comprises the actual response information to the UE.

**Figure 4** illustrates the format of a MAC RAR, according to 3GPP TS 36.321, V11.1.0, section 6.1.5. The MAC RAR consists of four fields: a reserved bit R, a Timing Advance Command, an Uplink (UL) Grant, and a temporary Cell Radio Network Temporary Identifier (C-RNTI).

As can be seen from **Figure 2****,** the RA procedure in LTE consists of:
- S1. RA Message 1 (Msg1): The UE 103 transmits a preamble on the Physical RA Channel (PRACH) to the eNodeB 101. Each cell has its own set of 64 RA preambles. However, preambles may be reused between non-neighbor cells. The preambles may optionally be divided into two groups, A and B. The UE then selects a group to randomly pick a preamble from, based on the potential message size and the channel quality. The potential message size is the size of the data available for transmission in message three of the RA procedure (S3. RA Message 3) plus the size of the MAC header and any possible MAC control elements. The channel quality is estimated in terms of the measured downlink (DL) path loss. Two conditions have to be met for the UE to select a preamble from preamble group B: the potential message size has to exceed a certain threshold and the estimated path loss has to be lower than a certain threshold.
- S2. RA Message 2 (Msg2): The eNodeB 101 sends a RA Response (RAR) to the UE 103 using a broadcast identifier, RA Radio Network Temporary Identifier (RA-RNTI). As indicated in **Figure 3** the RAR PDU may contain a BI and zero or more MAC RAR. Each MAC RAR comprises a temporary C-RNTI (TC-RNTI), a timing advance command, an UL grant and a reserved bit, R, which is set to zero. The MAC PDU header comprises one MAC subheader, i.e. one RAPID subheader, for each MAC RAR that is included in the RAR PDU. Each such corresponding RAPID subheader includes a RA preamble ID which indicates the received RA preamble that the corresponding MAC RAR pertains to. Hence, in this way each MAC RAR is mapped to a preamble transmitted by the UE and received by the eNodeB in step S1, and to a PRACH (see **Figure 3** and **Figure 4**).
- S3. RA Message 3 (Msg3): The UE 103 transmits RA Msg3 to the eNodeB 101 using the UL transmission resources allocated by the UL grant in step S2. The message comprises the RRC layer message RRCConnectionRequest, which includes a UE identity which may be an S-Temporary Mobile Subscriber Identity (S-TMSI) or a random value. The UE identity is used for contention resolution, i.e. to resolve situations where two or more UEs simultaneously used the same preamble in step S1. Depending on the parameters in the UL grant received in step S2, this Msg3 is transmitted 6 or 7 subframes after the reception of the RAR (RA Msg2) in a Frequency Division Duplex (FDD) mode. In Time Division Duplex (TDD) mode the timing also depends on the configuration of UL and DL subframes.
- S4. RA Message 4 (Msg4): To conclude the contention resolution, the eNodeB 101 echoes the UE identity received in RA Msg3 in a UE Contention Resolution Identity MAC Control Element in RA Msg4. RA Msg4 also carries the RRC layer message RRCConnectionSetup as a part of the RRC connection establishment. The UE "promotes" the TC-RNTI received in RA Msg2 to a regular C-RNTI.

The fifth message S5 is the RRCConnectionSetupComplete message from the UE 103 to the eNodeB 101. This message is not a part of the actual RA procedure although it is a part of the RRC connection establishment procedure. The RRCConnectionSetupComplete message also comprises the initial NAS message from the UE, forwarded to the MME in step S6.

The last message S6 illustrated in **Figure 2** is the S1AP Initial UE Message forwarded by the eNodeB 101 to the MME 102. This NAS message may be e.g. a Service Request as illustrated in **Figure 2****.** However, it may also be an Attach Request, or a Tracking Area Update Request message.

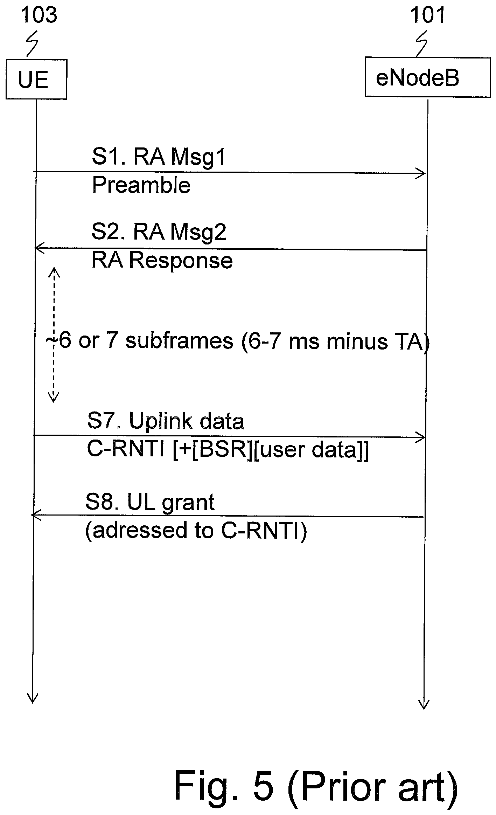

As described above, network access signaling is used in conjunction with idle to connected mode transition. However, network access signaling, including the RA procedure is involved also in the case where a UE that wants to transmit UL data is in RRC_CONNECTED state, but lacks UL synchronization, i.e. lacks a valid Timing Advance. A RA procedure will also be required even if a UE in RRC_CONNECTED state is synchronized with the UL, but has not been allocated any resources on the Physical UL Control Channel (PUCCH) for transmission of Scheduling Requests. The allocation of PUCCH resources is optional. This access signaling procedure is much briefer than during idle to connected mode transition. **Figure 5** illustrates the message sequence of the network access signaling involved when a UE in RRC_CONNECTED state that lacks a valid timing advance wants to transmit UL data in the FDD mode of EPS/LTE. Signaling in step S1 and S2 is the same as described above with reference to **Figure 2** during idle to connected mode transition. Whether the delay between step S2 and S7 is 6 or 7 subframes depends on the parameters of the UL grant in step S2. As previously mentioned, in TDD mode this delay also depends on the configuration of UL and DL subframes.

In step S7 of the message sequence of **Figure 5** the UE transmits UL data on the PUSCH utilizing the transmission resources allocated in step S2. This is opposed to the case of idle to connected mode transition where the UE transmits an RRCConnectionRequest message in step S3. Since the UE is in RRC_CONNECTED state, it already has a valid C-RNTI. The UE identifies itself in step S7 by including its C-RNTI in a C-RNTI MAC Control Element. If there is more room available in the allocated transmission resources, the UE may also include a Buffer Status Report (BSR) and/or user data according to the following rule: If all user data can be fit in the transport block, then inclusion of user data has priority over inclusion of a BSR, but if not all user data can be fit in the transport block, then the BSR has priority over the user data.

Step S8 is the contention resolution step, comprising an UL grant from the eNodeB 101 addressed to the C-RNTI transmitted from the UE in step S7.

If two or more UEs select and transmit the same preamble in the same subframe, they will listen to the same response message in step S2 and will thus attempt to transmit in step S7 using the same UL resources. This results in a RA collision and a contention situation. Such collisions cause transmission failures and in the worst case the eNodeB will not be able to successfully receive and decode any of the UEs' transmissions. A UE for which the contention resolution implies RA failure will reattempt the RA procedure, starting at step S1, possibly after a random backoff delay if a BI was included in the RA Response message in step S2.

A third variant of the RA procedure is used in conjunction with handover from one cell to another, e.g. between a source cell and a target cell belonging to two different eNodeBs. In this case the UE is allocated a dedicated, contention-free RA preamble prior to the execution of the handover. This is done in a mobilityControllnfo Information Element (IE) in an RRCConnectionReconfiguration message in the source cell. The dedicated, contention-free RA preamble is allocated by the target eNodeB and transferred to the source eNodeB before it is conveyed to the UE. The purpose of the subsequent RA procedure in the target cell is to acquire a timing advance in the new cell. Since the UE uses a dedicated, contention-free preamble, the risk for RA collisions is eliminated and the RA procedure may therefore be limited to the first two steps S1 and S2, i.e. RA Msg1 and RA Msg2.

As mentioned previously, it is of crucial importance for many MD applications that the network access control signaling is minimized. The problems caused by a large control signaling overhead include both energy consumption and access delay.

Arouk Osama, et al., "On Improving the Group Paging Method For Machine-type-Communications", 2014 IEEE International Conference on Communications (ICC), June 2014, pp. 484-489 discloses a solution to improve the performance of a group paging method.

US 2014/0126460 A discloses a terminal, which may include a generator configured to generate a request for radio network resources from a cellular network; a transmitter configured to transmit the request for radio network resources to a relay device, wherein the request for radio network resources may be configured to be forwarded by the relay device to a base station of the cellular network; and a controller configured to establish a cellular network connection between the terminal and the base station of the cellular network using radio network resources assigned to the terminal by the cellular network.

### SUMMARY

The invention is defined by the appended independent claims and further embodiments are described by the dependent claims. It is therefore an object to address at least some of the problems outlined above, and to provide a solution for RA that reduces energy consumption and access delay for wireless devices that are in connected mode, e.g. in RRC_CONNECTED state. This object and others are achieved by the methods and the apparatus according to the independent claims, and by the embodiments according to the dependent claims.

In accordance with a first aspect, a method for enabling RA of a wireless device being in connected mode in a cell served by a radio network node of a wireless communication system is provided. The method is performed in the radio network node. The method comprises allocating a contention-free RA preamble to the wireless device. The method further comprises transmitting an indicator of the contention-free RA preamble to the wireless device. The contention-free RA preamble is transmitted for use by the wireless device for performing RA in the cell at a coming RA occasion, the RA being initiated by the wireless device when data is available at the wireless device for uplink transmission.

In accordance with a second aspect, a method for enabling RA of a wireless device being in connected mode in a cell served by a radio network node of a wireless communication system is provided. The method is performed in the wireless device. The method comprises receiving an indicator of a contention-free RA preamble from the radio network node. The contention-free RA preamble is being allocated for use by the wireless device for performing RA in the cell at a coming RA occasion, the RA being initiated by the wireless device when data is available at the wireless device for uplink transmission.

In accordance with a third aspect, a method for enabling RA of a wireless device being in connected mode in a cell served by a radio network node of a wireless communication system is provided. The method is performed in a core network node of the wireless communication system connected to the radio network node. The method comprises determining whether the wireless device is a candidate for using a contention-free RA preamble. When the wireless device is determined to be a candidate, the method further comprises transmitting information to the radio network node indicating that the wireless device is a candidate for using the contention-free RA preamble.

In accordance with a fourth aspect, a radio network node of a wireless communication system configured to enable RA of a wireless device being in connected mode in a cell is provided. The radio network node is configured to serve the cell. The radio network node is further configured to allocate a contention-free RA preamble to the wireless device. The radio network node is also configured to transmit an indicator of the contention-free RA preamble to the wireless device. The contention-free RA preamble is transmitted for use by the wireless device for performing RA in the cell at a coming RA occasion, the RA being initiated by the wireless device when data is available at the wireless device for uplink transmission.

In accordance with a fifth aspect, a wireless device configured to enable RA when being in connected mode in a cell served by a radio network node of a wireless communication system is provided. The wireless device is further configured to receive an indicator of a contention-free RA preamble from the radio network node. The contention-free RA preamble is being allocated for use by the wireless device for performing RA in the cell at a coming RA occasion, the RA being initiated by the wireless device when data is available at the wireless device for uplink transmission.

In accordance with a sixth aspect, a core network node of a wireless communication system configured to enable RA of a wireless device being in connected mode in a cell served by a radio network node of the wireless communication system is provided. The core network node is connectable to the radio network node. The core network node is configured to determine whether the wireless device is a candidate for using a contention-free RA preamble. The core network node is also configured to transmit information to the radio network node indicating that the wireless device is a candidate for using the contention-free RA preamble, when it is determined that the wireless device is a candidate.

An advantage of embodiments is that the risk for RA preamble collision for UEs in connected mode is eliminated, thereby reducing the average energy consumption and network access delay for the UEs, which is particularly important for various MTC device applications.

Other objects, advantages and features of embodiments will be explained in the following detailed description when considered in conjunction with the accompanying drawings and claims.

### BRIEF DESCRIPTION OF THE DRAWINGS

**Figure 1** is a schematic illustration of an LTE network.
**Figure 2** is a signaling diagram illustrating the RA procedure and a first part of the RRC connection establishment procedure according to prior art.
**Figure** 3 is a block diagram schematically illustrating the format of the MAC PDU for a RAR according to prior art.
**Figure 4** is a block diagram schematically illustrating the format of a MAC RAR according to prior art.
**Figure 5** is a signaling diagram illustrating the message sequence of the network access signaling when a connected UE lacking a valid timing advance wants to transmit UL data according to prior art.

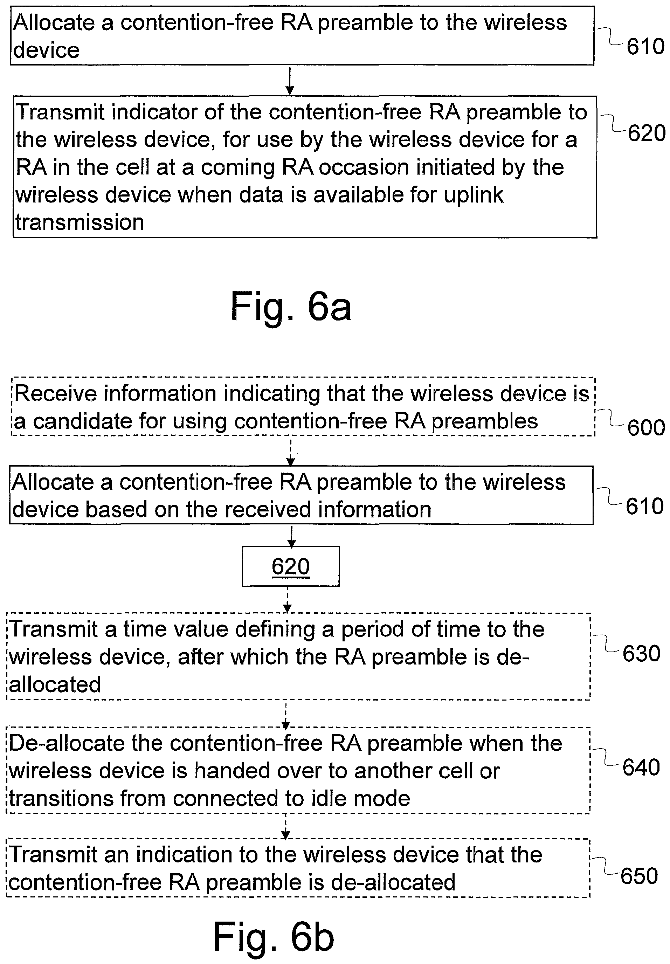

**Figures 6a****-b** are flowcharts illustrating the method in a radio network node according to embodiments.

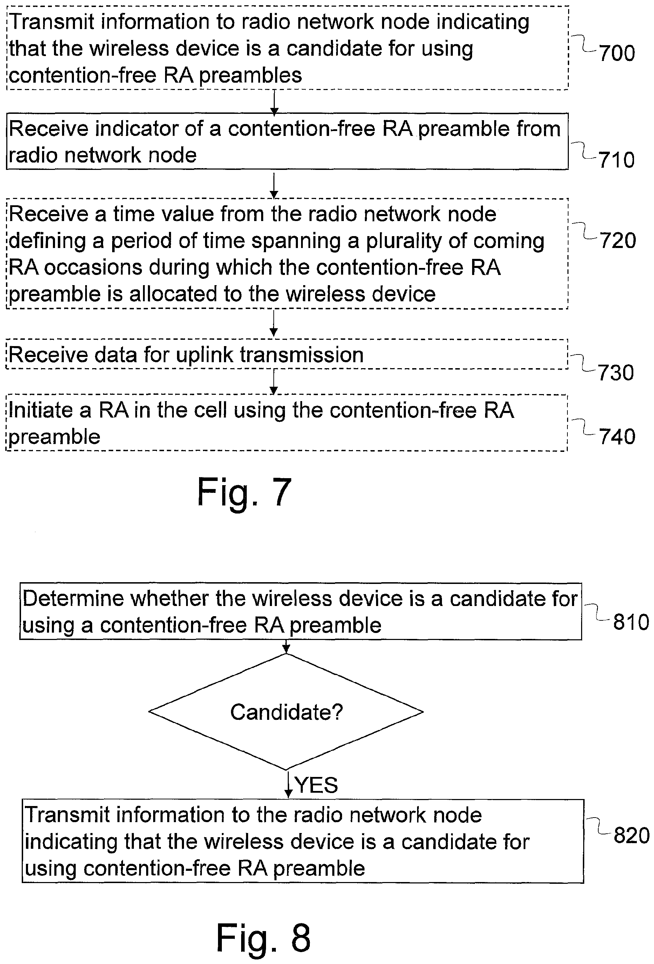

**Figure 7** is a flowchart illustrating the method in a wireless device according to embodiments.
**Figure 8** is a flowchart illustrating the method in a core network node according to embodiments.

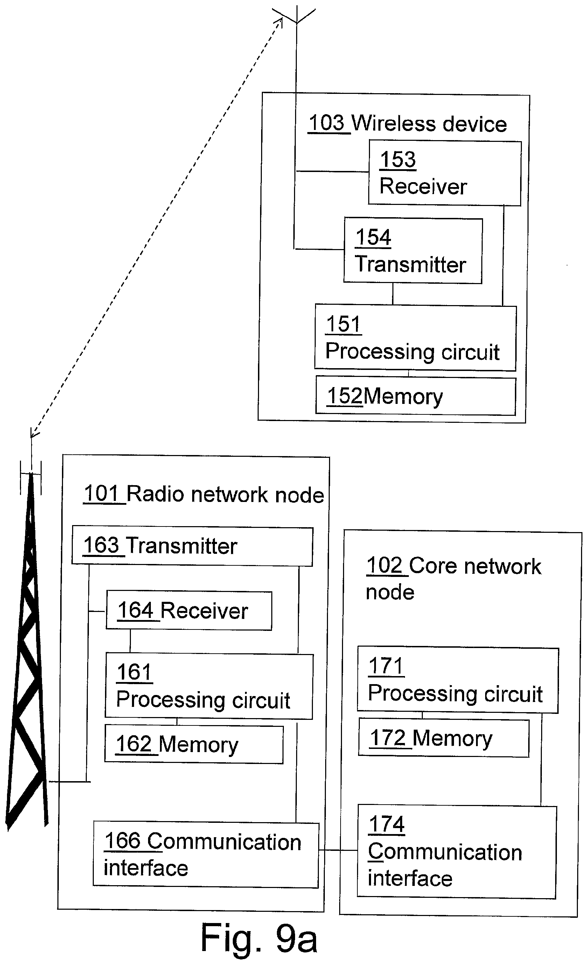

**Figures 9a****-b** are block diagrams schematically illustrating a radio network node, a wireless device, and a core network node according to embodiments.

### DETAILED DESCRIPTION

In the following, different aspects will be described in more detail with references to certain embodiments and to accompanying drawings. For purposes of explanation and not limitation, specific details are set forth, such as particular scenarios and techniques, in order to provide a thorough understanding of the different embodiments. However, other embodiments that depart from these specific details may also exist.

Embodiments are described in a non-limiting general context in relation to an example scenario in an E-UTRAN, where a UE in connected mode in a cell initiates a RA procedure with an eNodeB serving the cell. However, it should be noted that the embodiments may be applied to any radio access technology with paging and RA procedures similar to those in an E-UTRAN, such as in UTRAN, as well as to any kind of wireless device including - but not limited to - MD and MTC devices.

Reducing the signaling overhead is important to facilitate for MD and MTC devices to efficiently function using a cellular network, as battery lifetime may be a scarce resource and energy harvesting conditions may be poor. Hence, the network access signaling and in particular the RA procedure is an important target for optimizations. The RA procedure is involved in the network access signaling for devices in both RRC_IDLE and RRC_CONNECTED state. However, the solution according to embodiments of the invention is targeting scenarios where the UE is in a connected state or mode.

The problem of reducing signaling overhead during network access is thus addressed by a solution targeting the RA procedure for a UE in connected mode, the RA being initiated when the UE has data to transmit in uplink. A problematic property of the RA procedure is the randomly occurring RA collisions. RA collisions are of course undesirable in general, e.g. because they reduce the system efficiency and have negative consequences for the involved UEs. For the previously described MDs in particular, the negative consequences include both increased energy consumption and increased access delay. When a UE re-attempts the RA procedure after a failure caused by collision, there is no guarantee that the RA procedure will succeed the second time. Hence, through repeated collisions the access delay and signaling overhead are unbounded and may at least theoretically increase indefinitely.

To eliminate the risk of collisions, dedicated RA preambles - also called contention-free RA preambles - may be used in a new way. Normally, such dedicated RA preambles are used only in conjunction with UE handovers, where the dedicated RA preamble is allocated to the UE by the target eNodeB via the source eNodeB, as described in the background section. However, in embodiments of the invention, dedicated RA preambles are allocated on a long term to a small number of UEs that are in connected mode in a cell. The purpose is to offer the UE a possibility to use a dedicated RA preamble when the UE initiates a RA procedure. One example is the RA procedure that the UE in connected mode initiates when it lacks UL synchronization at reception of data from an application layer to transmit to the eNodeB, as described in the background section with reference to **Figure 5****.** An eNodeB may allocate the dedicated RA preamble to the UE using an RRC message such as an RRCConnectionReconfiguration message or an RRCConnectionSetup message. The preamble may also be transmitted using a MAC PDU carrying either of these two RRC messages or using a MAC Control Element.

When dedicated, contention-free RA preambles are allocated, the target is primarily devices that stay a long time in connected mode. This could e.g. be energy deprived MTC devices using extended connected mode DRX cycles in order to avoid the energy consuming idle to connected mode transitions. Another example is devices which are kept in connected mode for extensive periods in order to avoid the delay incurred by the idle to connected mode transition. They may be kept in connected mode by employing an extra-long inactivity timer in the eNodeB. When the inactivity timer expires the device is put into idle mode. Alternatively the device or UE may ensure that it remains in connected mode by sending data such as dummy packets to prevent the inactivity timer from expiring. When the UE has been allocated a dedicated, contention-free RA preamble, it may use a contention-free RA procedure which is certain to be collision-free and which may be shortened since no contention resolution is needed, as described in the background section with reference to **Figure 5****.** In such a contention-free RA procedure the RRCConnectionRequest message may, for example, be omitted in the transmission granted by the RAR.

### Allocation and deallocation of dedicated RA preamble

The eNodeB may assign a dedicated RA preamble and inform the UE about it using the RRCConnectionReconfiguration message or the RRCConnectionSetup message. The eNodeB may preferably reuse the preamble index indication used when allocating dedicated RA preambles in conjunction with handovers. Optionally, the entire RACH-ConfigDedicated IE, which also contains a PRACH mask index, may be reused.

An alternative to the above RRC messages could be to inform the UE about the allocated dedicated RA preamble in a MAC Control Element (CE) in a MAC message, e.g. in a MAC CE in the MAC PDU carrying either of the above two suggested RRC messages.

Optionally, the eNodeB may choose to allocate the dedicated RA preamble to the UE when the UE's Timing Advance timer expires. When the UE no longer has a valid Timing Advance value the UE has to perform a RA procedure prior to uplink transmissions.

Irrespective of options and allocation means for informing the UE about the allocated dedicated RA preamble, the preamble is allocated for a relatively long period of time, e.g. hours or more. This period of time, which hereinafter is referred to as a lease-time for the RA preamble, may be conveyed to the UE together with the indicator of the preamble also referred to as the preamble index, or it may be announced in the system information broadcasted in the cell. Optionally, the lease-time could be restarted every time the UE uses the dedicated RA preamble.

In addition to or instead of lease-time expiration, a dedicated RA preamble could be de-allocated using an explicit indication in an RRC message or a MAC message from the eNodeB to the UE. If explicit de-allocation is used, i.e. contrary to de-allocation at lease-time expiration, it means that the lease-time is not needed. One option could be that the eNodeB informs the UE that only explicit de-allocation is used by allocating an indefinite lease-time for the dedicated RA preamble. This information may be provided either in the system information or on a case-by-case basis in conjunction with the allocation of the dedicated RA preamble.

If the UE is handed over to a new cell, any dedicated RA preamble allocated in the old cell may be implicitly or explicitly de-allocated. The eNodeB serving the new cell may or may not decide to allocate a new dedicated RA preamble to the UE in the new cell.

If the UE moves to RRC_IDLE state, any dedicated RA preamble allocated to the UE may be implicitly or explicitly de-allocated.

### Selection of Target UEs

Dedicated RA preambles are a limited resource and may only be allocated to selected target UEs, especially when long RA preamble lease-times are used. To appropriately select the UEs to benefit from this feature, the eNodeB needs information that guides it. The information should guide the eNodeB to select UEs that can be kept in connected mode for a long time, that are stationary or moving only rarely or within a limited area so that they remain in the same cell, and that are energy deprived or require very short access delay.

Information or indications can originate from the UE, subscription data or automatic learning in the network by the eNodeB and/or the MME. Different variants are outlined in the following sections A to H.

### A. Indication in the RRCConnectionRequest Message

In this variant the UE indicates in the RRCConnectionRequest message that it has the suitable properties, e.g. that it is stationary, and/or that it is a candidate for using a dedicated RA preamble. The UE may also indicate a desired lease-time. However, the lease-time may also be set by the network, e.g. when an indicator of the dedicated RA preamble is transmitted to the UE at allocation. The lease-time set by the network may optionally be transmitted in system information or it may be defined by the standard specifications. One or more IE(s) could be introduced in the RRCConnectionRequest message for this purpose. Alternatively the spare bit of the RRCConnectionRequest message or one of the presently unused values of the establishmentCause IE could be used.

### B. Indication in the RRCConnectionSetupComplete Message

In this variant the UE indicates in the RRCConnectionSetupComplete message that it has the suitable properties and/or that it is a candidate for using a dedicated RA preamble. The UE may also indicate a desired lease-time. One or more IE(s) could be introduced in the RRCConnectionSetupComplete message for the purpose of these indications. An advantage of this approach compared to including the indication in the RRCConnectionRequest message is that there is more room for extensions in the RRCConnectionSetupComplete message than in the RRCConnectionRequest message. The ambition in 3GPP has been to keep the RRCConnectionRequest message very short. As a result, according to the current RRC specification, the RRCConnectionSetupComplete message can be extended with a non-critical extension, whereas the RRCConnectionRequest message cannot be extended in this manner. This makes it easier to add the new indication(s) in the RRCConnectionSetupComplete message than in the RRCConnectionRequest message.

### C. Preconfigured in Subscriber Data

In this variant the indication of suitable UE properties and/or that a UE is a candidate for using a dedicated RA preamble may be included in the subscriber data associated with the UE or with the user of the UE. Hence, it is stored in the Home Subscriber Server (HSS) in the Core Network and it is downloaded to the MME when the UE registers in the MME.

From the MME the indication or information is forwarded to the eNodeB in the first message from the MME to the eNodeB in the idle to connected mode transition procedure, i.e. in an Initial Context Setup Request S1AP message or in a Downlink NAS Transport S1AP message carrying an Authentication Request NAS message.

Optionally, the eNodeB does not consider the information from the MME, unless it has previously received an indication in either of the RRC messages RRCConnectionRequest or RRCConnectionSetupComplete (see option A or B above). If this option is used, it may be extended such that the indication from the UE triggers the eNodeB to include a similar indication in the S1AP Initial UE Message to trigger the MME to forward the concerned information to the eNodeB. In the absence of such an indication from the eNodeB the MME would not forward the information.

### D. Indication in a NAS Message

In this variant the UE indicates in a NAS message to the MME that it has the suitable properties and/or that it is a candidate for using a dedicated RA preamble. The NAS message should preferably be the one that is included in the RRCConnectionSetupComplete message. This NAS message may be a Service Request NAS message, an Attach Request NAS message, an Extended Service Request NAS message, or a Tracking Area Update Request NAS message.

Note that unless the UE wants to update the information, it only has to send the information once to the same MME as long as it remains registered in the same MME. This typically means that it is enough for the UE to send the suitability or capability indication or information in the Attach Request NAS message when it attaches to the network and in subsequent Tracking Area Update Request messages. Note that this excludes Tracking Area Update Request messages that are not triggered by movement to a tracking area with a Tracking Area Identity that is not included in the UE's current list of Tracking Area Identities, i.e. it excludes e.g. periodic tracking area updates.

It is also possible to include the indication or information in the UE related information that is transferred between MMEs during MME relocation. With this mechanism in place the UE need only provide its indication or information in the Attach Request NAS message, unless its wishes to update the information later.

To inform the eNodeB the MME forwards the indication or information to the eNodeB in the Initial Context Setup Request S1AP message or the Downlink NAS Transport S1AP message carrying the Authentication Request NAS message.

### E. Based on Device Capability or Category

In this variant the indication of suitable potential candidate properties of the UE is associated with a category or capabilities of the UE, i.e. the eNodeB may conclude from UE category or capability information that the UE is a suitable potential candidate for allocation of a dedicated RA preamble. The suitability indication or information could then be included in any of the lEs in the Attach Request NAS message that indicates various properties of the UE, i.e. the UE network capability IE, the MS network capability IE, the Mobile station classmark 2 IE or the Device properties IE. As these lEs are included in a NAS message they are delivered to the MME. Hence, the MME has to inform the eNodeB so that it may use the information when selecting UEs for allocation of dedicated RA preambles. The MME preferably does this by forwarding the suitability indication or information to the eNodeB in the Initial Context Setup Request S1AP message or the Downlink NAS Transport S1AP message carrying the Authentication Request NAS message.

The MME may keep the suitability indication or information in the UE context, i.e. its records of UE associated information, and may forward the information to a new MME in case of MME relocation.

Another preferable variant of basing the solution on the UE capability is to make use of radio capability related parameters. In this variant the UE-EUTRA-Capability IE is extended with the indication or information of properties, from which the eNodeB may derive that the UE is a suitable potential candidate for allocation of a dedicated RA preamble.

In the current RRC specification the UE-EUTRA-Capability IE is included in the ue-CapabilityRAT-Container IE, which in turn is included in the ue-CapabilityRAT-ContainerList IE in the UECapabilitylnformation RRC message.

In conjunction with the Attach procedure, i.e. when the UE first registers in the network and relevant contexts are established in core network nodes, such as the MME, the eNodeB requests the capability information from the UE by sending the RRC message UECapabilityEnquiry to the UE. The UE responds with the RRC message UECapabilitylnformation, including the capability information as described above. The eNodeB then forwards the information to the MME as follows. It includes the UECapabilitylnformation message in a ue-RadioAccessCapabilitylnfo IE, which it includes in a UERadioAccessCapabilitylnformation message specified as an RRC message. The UERadioAccessCapabilitylnformation message is in turn included in a UE Radio Capability IE, which the eNodeB sends to the MME in the S1AP message UE Capability Info Indication. The MME stores the UE capability information in its UE context and keeps it for as long as the UE remains attached to the network and transfers it to a new MME in case of MME relocation.

In subsequent cases during the same attach procedure, where the UE connects to the network, i.e. transits from idle to connected mode, the MME transfers the UE capability information to the eNodeB in the UE Radio Capability IE in the S1AP message Initial Context Setup Request. The UE Radio Capability IE is optional in the Initial Context Setup Request message, and during the attach procedure it is absent. This absence of the UE Radio Capability IE triggers the eNodeB to request the information from the UE and forward it to the MME, as described above.

As in the variant where the indication or information that the UE is a candidate is included in the subscriber data, an option is that the eNodeB does not consider the indication that the UE is a candidate from the MME, unless it has previously received an indication in either of the RRC messages RRCConnectionRequest or RRCConnectionSetupComplete. If this option is used, it may be extended such that the indication from the UE triggers the eNodeB to include a similar indication in the S1AP Initial UE Message to trigger the MME to forward the concerned information to the eNodeB. In the absence of such an indication from the eNodeB the MME would not forward the information.

### F. Indication in a MAC Control Element

In this variant the UE indicates in a MAC Control Element that it has the suitable properties and/or is a candidate for using a dedicated RA preamble. The MAC Control Element would preferably be included in the MAC PDU carrying one of the uplink RRC messages, e.g. the RRCConnectionRequest message or the RRCConnectionSetupComplete message. However, it could also be conveyed in a separate MAC PDU, such as a MAC PDU without Service Data Unit (SDU).

### G. Indication in RA Msg1

In this variant the indication of suitability for dedicated RA preamble allocation is included in the first message of the RA procedure, i.e. RA Msg1 preamble in S1 of **Figure 2****.**

The only means to indicate something in RA Msg1 is to use a preamble from a dedicated group of preambles. This implies that the current maximum two preamble groups A and B, would have to be complemented with another preamble group for this type of indication. A preamble from this group would indicate that the UE has suitable properties to make it a candidate for allocation of a dedicated RA preamble. If it is desired to be able to indicate one out of a set of indications, e.g. different desired lease-times, then a preamble group would have to be defined for each indication. Such preamble groups would be indicated in the system information, just as the presently existing preamble groups A and B.

### H. Automatic learning based on statistical data

The network may also learn the suitability of a UE from observations and statistics. In this variant the network does not rely on any explicit indication or information to indicate that a UE has suitable properties and/or is a potential candidate for allocation of a dedicated RA preamble. Instead the network learns the relevant UE properties from observing and maintaining statistics on the UE and its behavior.

Relevant properties that the network monitors are the degree of mobility of the UE and for how long the UE is kept in connected mode. Optionally the network may combine this learned information with information about the device category of the UE, what kind of application that is running on it, and/or what kind of subscription it has when eventually determining whether to allocate a dedicated RA preamble to the UE.

Mobility observations may involve several different movement related events or measurements, such as:
- Inter-eNodeB handovers, both X2 based and S1 based
- Intra-eNodeB handovers
- Timing Advance measurements
- Doppler shift measurements
- Angle of Arrival (AoA) measurements
- Network assisted UE positioning
- UE autonomous UE positioning, e.g. Global Positioning System (GPS) measurements
- Idle mode movements, e.g. cell reselection

The observations may be compiled to statistics that may be relevant for selection of UEs for allocation of dedicated RA preambles. A simple variant is to only monitor handover events, both intra-eNodeB and inter-eNodeB events, and to calculate a sliding average, e.g. an exponential average, of the handover frequency.

The eNodeB is the network node that is the most suitable for collecting this data. If measurements collected in the UE are to be used, such as GPS measurements or idle mode movement reports, then the eNodeB has to retrieve this information from the UE. One possibility for such retrieval is to make use of the RRC message exchange RRCInformationRequest from the eNodeB and RRCInformationResponse from the UE, and extend the RRCInformationResponse RRC message with the concerned information, e.g. with GPS coordinates. In general, the UE based information may be transferred on demand as in the section D where the eNodeB requests the capability information from the UE, periodically or opportunistically, i.e. utilizing messages that are anyway sent from the UE to the eNodeB.

The collected data may be kept locally in the eNodeB, but may also be forwarded to other eNodeBs during inter-eNodeB handovers, e.g. in an extension of the UE History Information IE in the Handover Request X2 Application Protocol (AP) message or in a new IE in that message. The forwarded data may also include information of how long the UE has been continuously in RRC_CONNECTED state. Forwarding of the data between eNodeB allows longer periods of data collection and thus more reliable statistics than if the data is only kept locally in one eNodeB.

The data will only be kept in an eNodeB as long as the UE remains in RRC_CONNECTED state. As soon as the UE goes to RRC_IDLE state or moves to another eNodeB, the data will be deleted together with other UE contextual data in the eNodeB. In order for the gathered data to be more reliable and relevant and to survive periods of RRC_IDLE state between periods of RRC_CONNECTED state, the eNodeB may transfer the accumulated data to the MME, e.g. in the UE Context Release Complete S1AP message. At inter-eNodeB handovers the source eNodeB may transfer the gathered information to the target eNodeB. Alternatively, the source eNodeB does not transfer the information to the target eNodeB, but instead transfers it to the MME in conjunction with the handover procedure. The data that is transferred to the MME may be kept in the MME, and forwarded to a new MME in case of MME relocation, as long as the UE remains attached to the network.

It would also be possible to bypass the eNodeB and let the MME and possibly the UE be responsible for the data collection. The MME itself can observe inter-eNodeB handovers from the Path Switch Request S1AP messages and may also observe intra-eNodeB handovers if it activates the UE location reporting feature across the S1 interface. In addition, the MME may be assisted by the UE, which may provide measurement results such as GPS coordinates and reports about primarily intra-eNodeB handover events and may also report movements performed during RRC_IDLE state, e.g. cell reselections. The UE may send its data to the MME in a suitable NAS message, e.g. one of the NAS messages Attach Request, Service Request or Tracking Area Update Request or in a new NAS message. The possible data from the UE may be transferred to the MME periodically, on demand or opportunistically, e.g. utilizing a Service Request NAS message. If the data is maintained in the MME, the MME has to ensure that the eNodeB receives relevant information for its selection of UEs to allocate dedicated RA preambles to. Hence, the MME has to transfer the data, a compiled version of the data, e.g. in the form of handover frequency or probability of handover, or a simple indication of whether the UE is a suitable candidate for allocation of a dedicated RA preamble to the eNodeB.

To provide even better statistics as the basis for the selection of UEs for allocation of dedicated RA preambles, the data may be stored in a database where it can survive periods when the UE is detached from the network. To this end, the MME may store the data in the HSS, in a database in the Operation and Maintenance (O&M) system or some other, potentially new, database that is accessible from or mirrored among all the MMEs in the network. As an option, the MME may store it in an MME internal database, only available to the MME itself, or in an MME pool internal database, only available to the MMEs in the same pool. If the data is stored in the HSS, the data may for instance be transferred from the MME to the HSS in a Cancel Location Ack message. When a UE registers in a new MME, e.g. through the Attach or Tracking Area Update procedure, the relevant data and statistics may be transferred from the HSS to the MME in an Update Location Ack message.

When storing new data in the database it should be integrated with the already accumulated data or, in some cases, replace the previously stored data. The integration with the already accumulated data may for instance be in the form of a simple addition or as an update of a sliding or moving average.

### Indication of Support of Allocation of Dedicated RA preambles

For those of the above described variants A-H where the UE sends a new type of indication or information to the network to say that it is a candidate for using dedicated RA preambles, it may be beneficial to include a parameter in the system information that indicates support for the feature in the cell. Absence of this indication in system information would then imply a lack of support for the feature, which would allow the UE to refrain from sending the indication that it is a candidate for using dedicated RA preambles. Sending such an indication to an eNodeB that does not support the feature may otherwise potentially cause incompatibility problems.

### Proactive Allocation of Dedicated RA preamble Based on Knowledge of UE Transmission Schedule

If the eNodeB through some means is aware of some regular UL transmission schedule of a UE, it may predict when the UE will initiate the RA procedure and could therefore benefit from a dedicated RA preamble. The eNodeB may then allocate a dedicated RA preamble to the UE right before an UL transmission, using any of the above described procedures.

Acquiring the UL transmission schedule of a UE may be difficult. Potential methods include learning based on previous UL transmissions or information received from the HSS, from an Application Server associated with the UE, or a Services Capability Server belonging to, or in connection with, the organization owning the UE in case the UE is an MTC device. The eNodeB or MME may receive information of the periodicity of the UE's uplink transmissions from either of these sources and may then by itself learn the "phase" of the transmission periods. In an alternative embodiment, the UE itself informs the eNodeB or the MME of its UL transmission schedule.

### Load Based Use of Allocation of Dedicated RA preambles

As a management strategy for the pool of potential dedicated RA preambles in a cell, the eNodeB may choose to use the herein described feature of allocating dedicated contention-free RA preambles only when the strain on the pool of dedicated RA preambles is low. Another alternative is to allocate dedicated RA preambles also when the strain on the pool of dedicated RA preambles is high, but only to high priority UEs. Alternatively the eNodeB may adapt the number of UEs that are subject to allocation of dedicated contention-free RA preambles depending on the availability of dedicated RA preambles in the cell. Yet another alternative is that the eNodeB adapts the lease-time, i.e. the time window, of allocated dedicated contention-free RA preambles depending on the availability of dedicated RA preambles in the cell.

### Allocation of Dedicated RA preambles to a Subset of Available PRACH Resources

In order to limit the negative impact on the available preamble pool that allocation of dedicated, contention-free RA preambles may have, it would be possible to make the allocation valid for only a subset of the available PRACH resources. This may be done in the time domain, in the frequency domain, or a combination of both.

Allocation with limited validity in the time domain, i.e. intermittent allocation or validity of allocation, could for instance be that the allocation of a dedicated contention-free RA preamble is made to apply only for certain periodically reoccurring PRACH occasions/resources, i.e. not to all PRACH occasions/resources.

Allocation with restrictions in the frequency domain would mean that the allocation is valid in a subset of the PRACH resources at every PRACH opportunity, i.e. every subframe where PRACH resources are available. As an example of frequency domain restriction of the allocation validity, a dedicated, contention-free RA preamble may be allocated for use in only, say, one out of three available PRACH resources in each PRACH subframe.

If allocation restrictions are applied in both the time and frequency domain, this could for instance mean that the allocation is valid for a subset of the PRACH subframes and only for a subset of the PRACH resources within the PRACH subframe subset.

Irrespective of whether limited allocation validity is used and which type of validity limitation that is used, the lease-time of the preamble, i.e. the time window within which it may be used by the concerned UE, may not be exceeded.

When the validity of the preamble allocation is limited to certain PRACH occasions/resources, the concerned preamble would be available for other usage for other PRACH occasions/resources. Such other usage may include:
- Limited - in the time domain or the frequency domain - long term allocation to other UEs, provided that the eNodeB makes sure that the PRACH occasions/resources for which the preamble is allocated to different UEs never coincide.
- Usage as a regular RA preamble for regular RA.

If the target of the long term allocation is only to save energy in the UE, then the period between the PRACH occasions for which an intermittent allocation, i.e. an allocation restricted in the time domain, is valid may be rather long. However, if the allocation is made for latency reduction purposes, it should be valid often, potentially in all PRACH occasions, meaning that a validity restriction in the frequency domain is preferable. Such delay sensitive applications are however typically expected to be rather cost insensitive high revenue services.

### Long Term Allocation of Dedicated RA Preambles to UEs in RRC IDLE State

The above described embodiments have been related to UEs in RRC_CONNECTED state. However, the scheme for long term allocation of dedicated, contention-free RA preambles may also be used for UEs in RRC_IDLE state. The dedicated RA preamble would still be allocated to the UE using any of the previously described methods, i.e. the UE would typically be in RRC_CONNECTED state when the actual allocation occurs. However, the dedicated RA preamble does not have to be de-allocated when the UE transits to RRC_IDLE state. Instead the UE stores the dedicated RA preamble together with an identifier associated with the cell in which the dedicated RA preamble was allocated and in which it is valid, and keeps the dedicated RA preamble also when in RRC_IDLE state, until the lease-time for the dedicated RA preamble expires.

If the UE moves to another cell it may still keep the dedicated RA preamble although it may not use it in that cell. However, if the UE later returns to the cell where the dedicated RA preamble is valid it may use the preamble again. The only impact this has on the eNodeB is that the eNodeB has to regard an allocated dedicated RA preamble as occupied until the lease-time expires, even if the concerned UE transits to RRC_IDLE state.

Another option is that an allocated dedicated RA preamble may be kept in the UE also when the UE is handed over to another cell while in RRC_CONNECTED state.

### Methods

**Figure 6a** is a flowchart illustrating an embodiment of a method for enabling RA of a wireless device 103 being in connected mode in a cell served by a radio network node 101 of a wireless communication system. The method is performed in the radio network node 101. As in the example embodiments described previously, the wireless device 103 may be a UE, and the radio network node may be an eNodeB in LTE. The method comprises:
- 610: Allocating a contention-free - or dedicated - RA preamble to the wireless device 103. The allocation of the contention-free RA preamble may be based on an availability of contention-free RA preambles in the cell. In one example embodiment, the allocation of the contention-free RA preamble may only take place if the availability is sufficient, e.g. if the amount of available contention-free RA preambles is above a threshold. Other alternatives are described above in the section *"Load Based Use of Allocation of Dedicated RA preambles".*
- 620: Transmitting an indicator of the contention-free RA preamble to the wireless device 103. The transmitted indicator is transmitted for use by the wireless device 103 for performing RA in the cell at a coming RA occasion, the RA being initiated by the wireless device 103 when data is available at the wireless device 103 for uplink transmission.

**Figure 6b** is a flowchart illustrating another embodiment of the method in the radio network node 101, wherein the contention-free RA preamble may be de-allocated after a period of time spanning a plurality of coming RA occasions. The period of time corresponds to the previously mentioned lease-time. The contention-free RA preamble may be valid for a subset of the radio frequency resources of the plurality of coming RA occasions, or for a subset of the plurality of coming RA occasions, or both. If the period of time spans ten coming RA occasions, the preamble may be valid for only five of them, and only in a limited subset of the radio frequency resources of the occasions. Further embodiments are described above in the section *"Allocation of Dedicated RA preambles to a Subset of Available PRACH Resources".* The method in the radio network node 101 may comprise:
- 600: Receive information indicating that the wireless device 103 is a candidate for using contention-free RA preambles. The information indicating that the wireless device 103 is a candidate for using contention-free RA preambles may be received from a core network node 102 connected to the radio network node 101, or from the wireless device 103, or from both. The information indicating that the wireless device 103 is a candidate for using contention-free RA preambles may be received in response to a request from the radio network node 101.
- 610: Allocating the contention-free RA preamble to the wireless device 103 based on the received information. The allocation of the contention-free RA preamble may also be based on an availability of contention-free RA preambles in the cell. In one example embodiment, the allocation of the contention-free RA preamble may only take place if the availability is sufficient, e.g. if the amount of available contention-free RA preambles is above a threshold. Other alternatives are described above in the section *"Load Based Use of Allocation of Dedicated RA preambles".*
- 620: Transmitting an indicator of the contention-free RA preamble to the wireless device 103, as described above.
- 630: Transmitting a time value defining the period of time spanning the plurality of coming RA occasions to the wireless device 103. The wireless device is thereby informed about the lease-time. After the lease time has lapsed, the RA preamble is de-allocated. The time value may be transmitted to the UE together with the preamble indicator, or it may be announced in the system information broadcasted in the cell. In this way, the wireless device knows for how long the RA preamble is allocated, and when it will be de-allocated.
- 640: De-allocating the contention-free RA preamble when the wireless device 103 is handed over to another cell or transitions from connected mode to idle mode. If the wireless device 103 is handed over to a new cell, the contention-free RA preamble allocated in the old cell may be de-allocated. The radio network node serving the new cell may or may not decide to allocate a new the contention-free RA preamble to the wireless device in the new cell. Furthermore, if the wireless device moves to e.g. RRC_IDLE state, any dedicated RA preamble allocated to the wireless device may be de-allocated. As mentioned above, the RA preamble is also de-allocated after the lease time has lapsed.

The method may optionally also comprise, when the contention-free RA preamble is de-allocated:
- 650: Transmitting an indication to the wireless device 103 that the contention-free RA preamble is de-allocated. This thus corresponds to an explicit de-allocation of the contention-free RA preamble. However, if only implicit de-allocation is used this transmission is not needed.

**Figure 7** is a flowchart illustrating an embodiment of a method for enabling RA of a wireless device 103 being in connected mode in a cell served by a radio network node 101 of a wireless communication system. The method is performed in the wireless device 103. The wireless device 103 may be a UE, and the radio network node may be an eNodeB in LTE. The method comprises:
- 710: Receiving an indicator of a contention-free RA preamble from the radio network node 101. The contention-free RA preamble is being allocated by the radio network node 101 for use by the wireless device 103 for performing RA in the cell at a coming RA occasion, the RA being initiated by the wireless device 103 when data is available at the wireless device 103 for uplink transmission. If the wireless device 103 receives e.g. uplink data from an application layer and needs to perform RA for the uplink transmission, the indicated contention-free RA preamble may be used. The advantage is that power consumption and delays are reduced as the RA is collision free.

The method may also optionally comprise the following:
- 700: Transmitting information to the radio network node 101 indicating that the wireless device 103 is a candidate for using contention-free RA preambles. In this embodiment the indicator of the contention-free RA preamble may be received 710 by the wireless device 103 in response to the transmitted information. The radio network node 101 is informed about the capability of the wireless device 103 and therefore selects this wireless device for an allocation of the contention-free RA preamble.
- 720: Receiving a time value from the radio network node 101 defining a period of time spanning a plurality of coming RA occasions after which the contention-free RA preamble is de-allocated. The period of time corresponds to the previously mentioned lease-time. The wireless device is thus informed about the lease-time. The time value may be received together with the preamble indicator, or it may be announced in the system information broadcasted in the cell. In this way, the wireless device knows for how long the RA preamble is allocated, and when it will be de-allocated. The contention-free RA preamble may be valid for a subset of the radio frequency resources of the plurality of coming RA occasions, or for a subset of the plurality of coming RA occasions, or both.

In embodiments, the contention-free RA preamble is de-allocated when the wireless device performs a hand over to another cell, and when the wireless device transitions from connected mode to idle mode. An example of explicit de-allocation is explained in method step 650 described above with reference to **Figure 6b****.** Consequently, the method in the wireless device may also comprise receiving an indication from the radio network node 101 that the contention-free RA preamble is de-allocated.

In one embodiment, the method may further comprise the following:
- 730: Receiving data for uplink transmission, e.g. from an application layer. The wireless device is therefore in need of a RA preamble.

The wireless device then determines whether the contention-free RA preamble is still allocated, and unless the contention-free RA preamble has been de-allocated, the method may further comprise:
- 740: Initiating RA in the cell using the contention-free RA preamble in response to receiving the data. The RA may be initiated if a timing advance timer of the wireless device 103 has expired. The RA may be initiated only if the timing advance timer has expired, as it is only then that the wireless device knows that it lacks uplink synchronization and needs to perform a RA.

**Figure 8** is a flowchart illustrating an embodiment of a method for enabling RA of a wireless device 103 being in connected mode in a cell served by a radio network node 101 of a wireless communication system. The method is performed in a core network node 102 of the wireless communication system. The core network node is connected to the radio network node 101. This embodiment corresponds to the embodiment of the radio network node described with reference to **Figure 6b****.** The wireless device 103 may be a UE, the radio network node 101 may be an eNodeB, and the core network node 102 may be an MME in LTE. The method comprises:
- 810: Determining whether the wireless device 103 is a candidate for using a contention-free RA preamble. The determining whether the wireless device 103 is a candidate, may be based on at least one of the following: subscription data related to the wireless device 103; first capability information received from the wireless device 103 in an attach request message; second capability information related to the wireless device 103, received from the radio network node 101 in conjunction with an attach procedure for the wireless device 103; and statistical data related to the wireless device 103.

When the wireless device 103 is determined to be a candidate, the method further comprises:
- 820: Transmitting information to the radio network node 101 indicating that the wireless device 103 is a candidate for using the contention-free RA preamble.

### Apparatus

An embodiment of a radio network node 101 and a core network node 102 of a wireless communication system, and a wireless device 103 is schematically illustrated in the block diagram in **Figure 9a****.**

The radio network node 101 is configured to enable RA of the wireless device 103 being in connected mode in a cell. The radio network node 101 is configured to serve the cell. The radio network node 101 is further configured to allocate a contention-free RA preamble to the wireless device 103. The radio network node 101 is also configured to transmit an indicator of the contention-free RA preamble to the wireless device 103. The indicated contention-free RA preamble is transmitted for use by the wireless device 103 for performing RA in the cell at a coming RA occasion, the RA being initiated by the wireless device 103 when data is available at the wireless device for uplink transmission.

In one embodiment, the radio network node 101 may be configured to allocate the contention-free RA preamble based on an availability of contention-free RA preambles in the cell.

In embodiments, the radio network node 101 may be configured to de-allocate the contention-free RA preamble after a period of time spanning a plurality of coming RA occasions, i.e. after the so called lease-time. Furthermore, the radio network node 101 may be configured to transmit a time value defining the period of time to the wireless device 103. The contention-free RA preamble my be valid for a subset of the radio frequency resources of the plurality of coming RA occasions, a subset of the plurality of coming RA occasions, or both.

In one embodiment, the radio network node 101 may be further configured to de-allocate the contention-free RA preamble when the wireless device 103 is handed over to another cell or transitions from connected mode to idle mode. The radio network node 101 may be further configured to, when the contention-free RA preamble is de-allocated, transmit an indication to the wireless device 103 that the contention-free RA preamble is de-allocated. However, in contrast to this explicit de-allocation, the de-allocation may be implicit in cases of handover or mode transition of the wireless device.

In embodiments of the invention, the radio network node 101 may be configured to receive information indicating that the wireless device 103 is a candidate for using contention-free RA preambles, and allocate the contention-free RA preamble to the wireless device 103 based on the received information. The radio network node 101 may be configured to receive the information indicating that the wireless device 103 is a candidate for using contention-free RA preambles from the core network node 102 connected to the radio network node 101, the wireless device 103, or both. The radio network node 101 may be configured to receive the information indicating that the wireless device 103 is a candidate for using contention-free RA preambles in response to a request from the radio network node 101.

The wireless device 103 in **Figure 9a** is configured to enable RA when being in connected mode in a cell served by a radio network node 101 of a wireless communication system. The wireless device 103 is further configured to receive an indicator of a contention-free RA preamble from the radio network node 101. The contention-free RA preamble is being allocated for use by the wireless device 103 for performing RA in the cell at a coming RA occasion, the RA being initiated by the wireless device 103 when data is available at the wireless device for uplink transmission.

In embodiments, the wireless device the wireless device 103 may be further configured to receive a time value from the radio network node 101 defining a period of time spanning a plurality of coming RA occasions after which the contention-free RA preamble is de-allocated.

The wireless device 103 may be further configured to receive an indication from the radio network node 101 that the contention-free RA preamble is de-allocated.

In one embodiment, the wireless device 103 may be further configured to receive data for uplink transmission. The wireless device 103 may also be further configured to initiate RA in the cell using the contention-free RA preamble in response to receiving the data, unless the contention-free RA preamble has been de-allocated. The wireless device 103 may be configured to initiate the RA if a timing advance timer of the wireless device 103 has expired.

The wireless device 103 may be further configured to transmit information to the radio network node 101 indicating that the wireless device 103 is a candidate for using contention-free RA preambles, and receive the indicator of the contention-free RA preamble in response to the transmitted information.

The core network node 102 in **Figure 9a** is configured to enable RA of a wireless device 103 being in connected mode in a cell served by a radio network node 101 of the wireless communication system. The core network node 102 is connectable to the radio network node 101. The core network node 102 is configured to determine whether the wireless device 103 is a candidate for using a contention-free RA preamble. The core network node 102 is also configured to transmit information to the radio network node 101 indicating that the wireless device 103 is a candidate for using the contention-free RA preamble, when it is determined that the wireless device 103 is a candidate.

In one embodiment, the core network node 102 may be configured to determine whether the wireless device 103 is a candidate based on subscription data related to the wireless device 103; first capability information received from the wireless device 103 in an attach request message; second capability information related to the wireless device 103, received from the radio network node 101 in conjunction with an attach procedure for the wireless device 103; or statistical data related to the wireless device 103. The core network node 102 may also be configured to determine whether the wireless device 103 is a candidate based on a combination of the above.

In an alternative way to describe the embodiment in **Figure 9a****,** the radio network node 101 comprises a processing circuit 161 and a memory 162. The radio network node 101 may also comprise a communication interface 166, supporting e.g. the S1 interface between the radio access network and the core network in EPS. The radio network node 101 may also comprise a receiver 164 and a transmitter 163 configured to communicate wirelessly with the wireless device 103. The memory 162 comprises instructions executable by the processing circuit 161 whereby the radio network node 101 is operative to allocate a contention-free RA preamble to the wireless device 103. The radio network node 101 may also be operative to transmit an indicator of the contention-free RA preamble to the wireless device 103 via the transmitter 163. The indicator of the contention-free RA preamble is transmitted for use by the wireless device 103 for performing RA in the cell at a coming RA occasion, the RA being initiated by the wireless device 103 when data is available at the wireless device for uplink transmission via the transmitter 163.

Further, according to the alternative way to describe the embodiment in **Figure 9a****,** the wireless device 103 comprises a processing circuit 151 and a memory 152, as well as a receiver 153 and a transmitter 154 for the communication with the radio network node 101. The memory 152 comprises instructions executable by the processing circuit 151, whereby the wireless device 103 is operative to receive an indicator of a contention-free RA preamble from the radio network node 101 via the receiver 153. The contention-free RA preamble is allocated by the radio network node 101 for use by the wireless device 103 for performing RA in the cell at a coming RA occasion, the RA being initiated by the wireless device 103 when data is available at the wireless device for uplink transmission.

Further, the core network node 102 comprises a processing circuit 171 and a memory 172, and a communication interface 174 supporting for example the S1 interface for communicating with the radio network node 101. The memory 172 comprises instructions executable by the processing circuit 171 whereby the core network node 102 is operative to determine whether the wireless device 103 is a candidate for using a contention-free RA preamble. When the wireless device 103 is a candidate, the core network node is operative to transmit information via the communication interface 174 to the radio network node 101 indicating that the wireless device 103 is a candidate for using dedicated RA preambles. In embodiments, the core network node 102 may be operative to determine whether the wireless device 103 is a candidate, based on at least one of the following: subscription data related to the wireless device 103; first capability information received from the wireless device 103 in an attach request message; second capability information related to the wireless device 103, received from the radio network node 101 in conjunction with an attach procedure for the wireless device 103; statistical data related to the wireless device 103.

It is to be noted that the term processing circuit used herein includes any hardware capable of executing instructions and/or program codes, e.g., a microprocessor such as a Central Processing Unit (CPU), a digital signal processor (DSP), or any other general-purpose or application specific processors. Furthermore, the term memory used herein includes any storage medium capable of storing instructions and/or program codes, e.g., a magnetic storage medium, an optical storage medium, a semiconductor storage medium and any other volatile or non-volatile storage mediums.

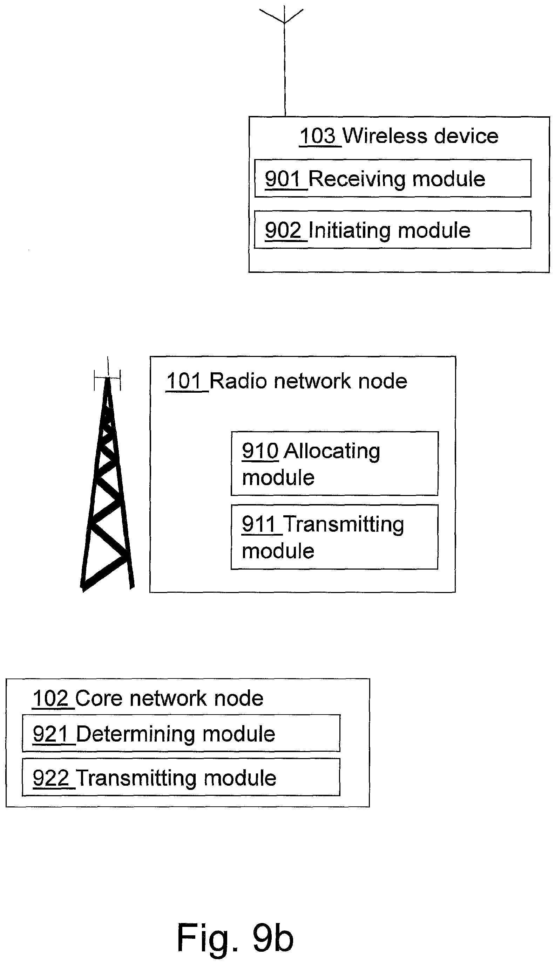

In still another alternative way to describe the embodiment in **Figure 9a****,** illustrated in **Figure 9b****,** the radio network node 101 comprises an allocating module 910 adapted to allocate a contention-free RA preamble to the wireless device 103. The radio network node 101 also comprises a transmitting module 911 adapted to transmit an indicator of the contention-free RA preamble to the wireless device 103.

The wireless device 103 comprises a receiving module 901 adapted to receive an indicator of a contention-free RA preamble from the radio network node 101. The contention-free RA preamble is allocated for use by the wireless device 103 for performing RA in the cell at a coming RA occasion, the RA being initiated by the wireless device 103 when data is available at the wireless device for uplink transmission. The wireless device 103 may also comprise an initiating module 902 adapted to initiate RA in the cell using the contention-free RA preamble in response to receiving data for uplink transmission.

The core network node 102 comprises a determining module 921 adapted to determine whether the wireless device 103 is a candidate for using a contention-free RA preamble. The core network node 102 also comprises a transmitting module 922 adapted to transmit information to the radio network node 101 indicating that the wireless device 103 is a candidate for using dedicated RA preambles, when it is determined that the wireless device 103 is a candidate.

The modules described above with reference to **Figure 9b** are functional units which may be implemented in hardware, software, firmware or any combination thereof. In one embodiment, the modules are implemented as a computer program running on a processor.

The radio network node 101, the core network node 102, and the wireless device 103 may comprise a Central Processing Unit (CPU) each, which may be a single unit or a plurality of units. Furthermore, the radio network node 101, the core network node 102, and the wireless device 103 may comprise at least one computer program product (CPP) each in the form of a non-volatile memory, e.g. an EEPROM (Electrically Erasable Programmable Read-Only Memory), a flash memory or a disk drive. The CPP comprises a computer program, which in turn comprises code means which when run on the radio network node 101, the core network node 102, and the wireless device 103 respectively, causes the nodes and the wireless device to perform steps of the methods described earlier in conjunction with **Figures 6a****-b, 7** and **8.**

The above mentioned and described embodiments are only given as examples and should not be limiting. Other solutions, uses, objectives, and functions within the scope of the accompanying patent claims may be possible.

### Abbreviations

3GPP 3rd Generation Partnership Project
AoA Angle of Arrival
BI Backoff Indicator
BSR Buffer Status Report
C-RNTI Cell Radio Network Temporary Identifier
DCI DL Control Information
DL Downlink
EPS Evolved Packet System
E-UTRAN Evolved Universal Terrestrial Radio Access Network
FDD Frequency Division Duplex
GPS Global Positioning System
HSS Home Subscriber Server
ID Identity/Identifier
IE Information Element
LTE Long Term Evolution
M2M Machine-to-Machine
MAC Medium Access Control
MD Machine Device
MME Mobility Management Entity
Msg Message
MTC Machine Type Communication
NAS Non-Access Stratum
O&M Operation and Maintenance
PDCCH Physical DL Control Channel
PDSCH Physical DL Shared Channel
PDU Packet Data Unit
PRACH Physical RA Channel
P-RNTI Paging RNTI
PUCCH Physical UL Control Channel
PUSCH Physical UL Shared Channel
RA Random Access
RACH RA Channel
RAPID RA Preamble ID
RAR RA Response
RNTI Radio Network Temporary Identifier
RRC Radio Resource Control
S1 The interface between the radio access network and the core network in EPS.
S1AP S1 Application Protocol (a protocol used between an eNodeB and an MME)
S-TMSI S-Temporary Mobile Subscriber Identity
TA Timing Advance
TC-RNTI Temporary C-RNTI
TDD Time Division Duplex
TS Technical Specification
UE User Equipment
UL Uplink
UMTS Universal Mobile Telecommunications System
X2 The interface between two eNodeBs in LTE.
X2AP X2 Application Protocol

## Claims

1. A method for enabling random access of a wireless device (103) being in connected mode in a cell served by a radio network node (101) of a wireless communication system, the method being performed in the radio network node (101), the method comprising:
- allocating (610) a contention-free random access preamble to the wireless device (103), wherein the contention-free random access preamble is de-allocated after a period of time spanning a plurality of coming random access occasions;
- transmitting (620) an indicator of the contention-free random access preamble to the wireless device (103), for use by the wireless device (103) for performing random access in the cell at a coming random access occasion, the random access being initiated by the wireless device (103) when data is available at the wireless device (103) for uplink transmission;
- transmitting (630) a time value defining said period of time to the wireless device (103); and **characterized by**
when the contention-free random access preamble is de-allocated:
- transmitting an indication to the wireless device (103) that the contention-free random access preamble is de-allocated.

2. A method for enabling random access of a wireless device (103) being in connected mode in a cell served by a radio network node (101) of a wireless communication system, the method being performed in the wireless device (103), the method comprising:
- receiving (710) an indicator of a contention-free random access preamble from the radio network node (101), the contention-free random access preamble being allocated for use by the wireless device (103) for performing random access in the cell at a coming random access occasion, the random access being initiated by the wireless device (103) when data is available at the wireless device (103) for uplink transmission;
- receiving (720) a time value from the radio network node (101) defining a period of time spanning a plurality of coming random access occasions after which the contention-free random access preamble is de-allocated; and **characterized by**
- receiving an indication from the radio network node (101) that the contention-free random access preamble is de-allocated.

3. A radio network node (101) of a wireless communication system configured to enable random access of a wireless device (103) being in connected mode in a cell, the radio network node (101) being configured to serve the cell, the radio network node (101) being further configured to:
- allocate a contention-free random access preamble to the wireless device (103) and de-allocate the contention-free random access preamble after a period of time spanning a plurality of coming random access occasions,
- transmit an indicator of the contention-free random access preamble to the wireless device (103), for use by the wireless device (103) for performing random access in the cell at a coming random access occasion, the random access being initiated by the wireless device (103) when data is available at the wireless device (103) for uplink transmission, and
- transmit a time value defining said period of time to the wireless device (103), and **characterized by**
when the contention-free random access preamble is de-allocated:
- transmit an indication to the wireless device (103) that the contention-free random access preamble is de-allocated.

4. The radio network node (101) according to claim 3, wherein the contention-free random access preamble is valid for at least one of the following: a subset of the radio frequency resources of the plurality of coming random access occasions, and a subset of the plurality of coming random access occasions.

5. The radio network node (101) according to any of claims 3-4, the radio network node (101) being further configured to:
- de-allocate the contention-free random access preamble when the wireless device (103) is handed over to another cell or transitions from connected mode to idle mode.

6. The radio network node (101) according to any of claims 3-5, the radio network node (101) being further configured to:
- receive information indicating that the wireless device (103) is a candidate for using contention-free random access preambles, and
- allocate the contention-free random access preamble to the wireless device (103) based on the received information.

7. The radio network node (101) according to claim 6, wherein the radio network node (101) is configured to receive the information indicating that the wireless device (103) is a candidate for using contention-free random access preambles from at least one of:
- a core network node (102) connected to the radio network node (101), and
- the wireless device (103).

8. The radio network node (101) according to any of claims 6-7, wherein the radio network node (101) is configured to receive the information indicating that the wireless device (103) is a candidate for using contention-free random access preambles in response to a request from the radio network node (101).

9. The radio network node (101) according to any of claims 3-8, wherein the radio network node (101) is configured to allocate the contention-free random access preamble based on an availability of contention-free random access preambles in the cell.

10. A wireless device (103) configured to enable random access when being in connected mode in a cell served by a radio network node (101) of a wireless communication system, the wireless device (103) being further configured to:
- receive an indicator of a contention-free random access preamble from the radio network node (101), the contention-free random access preamble being allocated for use by the wireless device (103) for performing random access in the cell at a coming random access occasion, the random access being initiated by the wireless device (103) when data is available at the wireless device for uplink transmission;
- receive a time value from the radio network node (101) defining a period of time spanning a plurality of coming random access occasions after which the contention-free random access preamble is de-allocated; and **characterized in that** the wireless device is further configured to
- receive an indication from the radio network node (101) that the contention-free random access preamble is de-allocated.

11. The wireless device (103) according to claim 10, the wireless device (103) being further configured to:
- receive data for uplink transmission,
and unless the contention-free random access preamble has been de-allocated, the wireless device (103) being further configured to:
- initiate random access in the cell using the contention-free random access preamble in response to receiving the data.

12. The wireless device (103) according to claim 11, wherein the wireless device (103) is configured to initiate the random access if a timing advance timer of the wireless device (103) has expired.

13. The wireless device (103) according to any of claims 10-12, the wireless device (103) being further configured to:
- transmit information to the radio network node (101) indicating that the wireless device (103) is a candidate for using contention-free random access preambles, and
- receive the indicator of the contention-free random access preamble in response to the transmitted information.

## Patentansprüche

1. Verfahren zum Aktivieren eines Direktzugriffs auf eine drahtlose Vorrichtung (103), die sich in einem verbundenen Modus in einer Zelle befindet, die durch einen Funknetzknoten (101) eines drahtlosen Kommunikationssystem bedient wird, wobei das Verfahren in dem Funknetzknoten (101) durchgeführt wird, wobei das Verfahren umfasst:
- Zuordnen (610) eines konkurrenzfreien Direktzugriffsvorspanns zur drahtlosen Vorrichtung (103), wobei die Zuordnung des konkurrenzfreien Direktzugriffsvorspanns nach einem Zeitraum des Überspannens einer Vielzahl von kommenden Direktzugriffsereignissen aufgehoben wird;
- Übertragen (620) eines Indikators des konkurrenzfreien Direktzugriffsvorspanns zur drahtlosen Vorrichtung (103) zur Verwendung durch die drahtlose Vorrichtung (103) zum Durchführen des Direktzugriffs in der Zelle bei einem kommenden Direktzugriffsereignis, wobei der Direktzugriff durch die drahtlose Vorrichtung (103) eingeleitet wird, wenn bei der drahtlosen Vorrichtung (103) Daten zur Uplink-Übertragung verfügbar sind;
- Übertragen (630) eines Zeitwerts zur drahtlosen Vorrichtung (103), der den Zeitraum definiert; und **gekennzeichnet durch**
wenn die Zuordnung des konkurrenzfreien Direktzugriffsvorspanns aufgehoben ist:
- Übertragen einer Angabe zur drahtlosen Vorrichtung (103), dass die Zuordnung des konkurrenzfreien Direktzugriffsvorspanns aufgehoben ist.

2. Verfahren zum Aktivieren eines Direktzugriffs auf eine drahtlose Vorrichtung (103), die sich in einem verbundenen Modus in einer Zelle befindet, die durch einen Funknetzknoten (101) eines drahtlosen Kommunikationssystems bedient wird, wobei das Verfahren in der drahtlosen Vorrichtung (103) durchgeführt wird, wobei das Verfahren umfasst:
- Empfangen (710) eines Hinweises eines konkurrenzfreien Direktzugriffsvorspanns vom Funknetzknoten (101), wobei der konkurrenzfreie Direktzugriffsvorspann zur Verwendung durch die drahtlose Vorrichtung (103) zum Durchführen des Direktzugriffs in der Zelle bei einem kommenden Direktzugriffsereignis zugeordnet ist, wobei der Direktzugriff durch die drahtlose Vorrichtung (103) eingeleitet wird, wenn bei der drahtlosen Vorrichtung (103) Daten zur Uplink-Übertragung verfügbar sind;
- Empfangen(720) eines Zeitwerts vom Funknetzknoten (101), der eine Zeitperiode definiert, die eine Vielzahl von kommenden Direktzugriffsereignissen überspannt, nach denen die Zuordnung des konkurrenzfreien Direktzugriffsvorspanns aufgehoben wird; und **gekennzeichnet durch**
- Empfangen einer Angabe vom Funknetzknoten (101), dass der konkurrenzfreie Direktzugriffsvorspann aufgehoben ist.

3. Funknetzknoten (101) eines drahtlosen Kommunikationssystems, der eingerichtet ist zum Aktivieren eines Direktzugriffs einer drahtlosen Vorrichtung (103), die sich in einem verbundenen Modus in einer Zelle befindet, wobei der Funknetzknoten (101) so eingerichtet ist, dass er die Zelle bedient, wobei der Funknetzknoten (101) ferner eingerichtet ist zum:
- Zuordnen eines konkurrenzfreien Direktzugriffsvorspanns der drahtlosen Vorrichtung (103) und Aufheben der Zuordnung des konkurrenzfreien Direktzugriffsvorspanns nach einem Zeitraum des Überspannens einer Vielzahl von kommenden Direktzugriffsereignissen,
- Übertragen eines Indikators des konkurrenzfreien Direktzugriffsvorspanns zur drahtlosen Vorrichtung (103) zur Verwendung durch die drahtlose Vorrichtung (103) zum Durchführen des Direktzugriffs in der Zelle bei einem kommenden Direktzugriffsereignis, wobei der Direktzugriff durch die drahtlose Vorrichtung (103) eingeleitet wird, wenn bei der drahtlosen Vorrichtung (103) Daten zur Uplink-Übertragung verfügbar sind, und
- Übertragen eines Zeitwerts zur drahtlosen Vorrichtung (103), der den Zeitraum definiert, und **gekennzeichnet durch**
wenn die Zuordnung des konkurrenzfreien Direktzugriffsvorspanns aufgehoben ist:
- Übertragen einer Angabe zur drahtlosen Vorrichtung (103), dass die Zuordnung des konkurrenzfreien Direktzugriffsvorspanns aufgehoben ist.

4. Funknetzknoten (101) nach Anspruch 3, wobei der konkurrenzfreie Direktzugriffsvorspann für mindestens eines gilt aus: einer Teilmenge der Funkfrequenzressourcen der Vielzahl von kommenden Direktzugriffsereignissen und einer Teilmenge der Vielzahl von kommenden Direktzugriffsereignissen.

5. Funknetzknoten (101) nach einem der Ansprüche 3 bis 4, wobei der Funknetzknoten (101) ferner eingerichtet ist zum:
- Aufheben der Zuordnung des konkurrenzfreien Direktzugriffsvorspanns, wenn die drahtlose Vorrichtung (103) an eine andere Zelle übergeben wird oder vom verbundenen Modus in den Ruhemodus übergeht.

6. Funknetzknoten (101) nach einem der Ansprüche 3 bis 5, wobei der Funknetzknoten (101) ferner eingerichtet ist zum:
- Empfangen von Informationen, die angeben, dass die drahtlose Vorrichtung (103) ein Kandidat zum Verwenden des konkurrenzfreien Direktzugriffsvorspanns ist, und
- Zuordnen des konkurrenzfreien Direktzugriffsvorspanns auf der Grundlage der empfangenen Informationen der drahtlosen Vorrichtung (103).

7. Funknetzknoten (101) nach Anspruch 6, wobei der Funknetzknoten (101) eingerichtet ist zum Empfangen der Informationen, die angeben, dass die drahtlose Vorrichtung (103) ein Kandidat ist, um konkurrenzfreie Direktzugriffsvorspanne aus mindestens einem zu verwenden aus:
- einem Kernnetzknoten (102), der mit dem Funknetzknoten (101) verbunden ist, und
- der drahtlosen Vorrichtung (103).

8. Funknetzknoten (101) nach einem der Ansprüche 6 bis 7, wobei der Funknetzknoten (101) eingerichtet ist zum Empfangen der Informationen, die angeben, dass die drahtlose Vorrichtung (103) als Reaktion auf eine Anforderung vom Funknetzknoten (101) ein Kandidat ist, um konkurrenzfreie Direktzugriffsvorspanne zu verwenden.

9. Funknetzknoten (101) nach einem der Ansprüche 3 bis 8, wobei der Funknetzknoten (101) eingerichtet ist zum Zuordnen des konkurrenzfreien Direktzugriffsvorspanns auf der Grundlage einer Verfügbarkeit von konkurrenzfreien Direktzugriffsvorspannen in der Zelle.

10. Drahtlose Vorrichtung (103), die eingerichtet ist zum Aktivieren eines Direktzugriffs, wenn sie sich in einem verbundenen Modus in einer Zelle befindet, die durch einen Funknetzknoten (101) eines drahtlosen Kommunikationssystems bedient wird, wobei die drahtlose Vorrichtung (103) ferner eingerichtet ist zum:
- Empfangen eines Indikators eines konkurrenzfreien Direktzugriffsvorspanns vom Funknetzknoten (101), wobei der konkurrenzfreie Direktzugriffsvorspann zur Verwendung durch die drahtlose Vorrichtung (103) zum Durchführen des Direktzugriffs in einer Zelle bei einem kommenden Direktzugriffsereignis zugeordnet ist, wobei der Direktzugriff durch die drahtlose Vorrichtung (103) eingeleitet wird, wenn bei der drahtlosen Vorrichtung Daten zur Uplink-Übertragung verfügbar sind;
- Empfangen eines Zeitwerts vom Funknetzknoten (101), der eine Zeitperiode definiert, die eine Vielzahl von kommenden Direktzugriffsereignissen überspannt, nach denen die Zuordnung des konkurrenzfreien Direktzugriffsvorspanns aufgehoben wird; und
**dadurch gekennzeichnet, dass** die drahtlose Vorrichtung ferner eingerichtet ist zum
- Empfangen einer Angabe vom Funknetzknoten (101), dass der konkurrenzfreie Direktzugriffsvorspann aufgehoben ist.

11. Drahtlose Vorrichtung (103) nach Anspruch 10, wobei die drahtlose Vorrichtung (103) ferner eingerichtet ist zum:
- Empfangen von Daten zur Uplink-Übertragung,
und sofern die Zuordnung des konkurrenzfreien Direktzugriffsvorspanns nicht aufgehoben wurde, die drahtlose Vorrichtung (103) ferner eingerichtet ist zum:
- Einleiten eines Direktzugriffs in der Zelle unter Verwendung des konkurrenzfreien Direktzugriffsvorspanns als Reaktion auf das Empfangen der Daten.

12. Drahtlose Vorrichtung (103) nach Anspruch 11, wobei die drahtlose Vorrichtung (103) eingerichtet ist zum Einleiten des Direktzugriffs, wenn ein Zeitsteuerungsvorlaufzeitgeber der drahtlosen Vorrichtung (103) abgelaufen ist.

13. Drahtlose Vorrichtung (103) nach einem der Ansprüche 10 bis 12, wobei die drahtlose Vorrichtung (103) eingerichtet ist zum:
- Übertragen von Informationen zum Funknetzknoten (101), die angeben, dass die drahtlose Vorrichtung (103) ein Kandidat zum Verwenden des konkurrenzfreien Direktzugriffsvorspanns ist, und
- Empfangen des Indikators des konkurrenzfreien Direktzugriffsvorspanns als Reaktion auf die übertragenen Informationen.

## Revendications

1. Procédé pour permettre un accès aléatoire d'un dispositif sans fil (103) étant en mode connecté dans une cellule desservie par un nœud de réseau radio (101) d'un système de communication sans fil, le procédé étant mis en œuvre dans le nœud de réseau radio (101), le procédé comprenant :
- l'allocation (610) d'un préambule d'accès aléatoire sans contention au dispositif sans fil (103), dans lequel le préambule d'accès aléatoire sans contention est désalloué après une période de temps couvrant une pluralité d'occasions d'accès aléatoire se présentant ;
- la transmission (620) d'un indicateur du préambule d'accès aléatoire sans contention au dispositif sans fil (103), pour une utilisation par le dispositif sans fil (103) pour mettre en œuvre un accès aléatoire dans la cellule lors d'une occasion d'accès aléatoire se présentant, l'accès aléatoire étant amorcé par le dispositif sans fil (103) lorsque des données sont disponibles au niveau du dispositif sans fil (103) pour transmission en liaison montante ;
- la transmission (630) d'une valeur de temps définissant ladite période de temps au dispositif sans fil (103) ; et
**caractérisé par** lorsque le préambule d'accès aléatoire sans contention est désalloué :
- la transmission d'une indication au dispositif sans fil (103) indiquant que le préambule d'accès aléatoire sans contention est désalloué.

2. Procédé pour permettre un accès aléatoire d'un dispositif sans fil (103) étant en mode connecté dans une cellule desservie par un nœud de réseau radio (101) d'un système de communication sans fil, le procédé étant mis en œuvre dans le dispositif sans fil (103), le procédé comprenant :
- la réception (710) d'un indicateur d'un préambule d'accès aléatoire sans contention depuis le nœud de réseau radio (101), le préambule d'accès aléatoire sans contention étant alloué pour une utilisation par le dispositif sans fil (103) pour mettre en œuvre un accès aléatoire dans la cellule lors d'une occasion d'accès aléatoire se présentant, l'accès aléatoire étant amorcé par le dispositif sans fil (103) lorsque des données sont disponibles au niveau du dispositif sans fil (103) pour transmission en liaison montante ;
- la réception (720) d'une valeur de temps depuis le nœud de réseau radio (101) définissant une période de temps couvrant une pluralité d'occasions d'accès aléatoire se présentant après laquelle le préambule d'accès aléatoire sans contention est désalloué ; et **caractérisé par**
- la réception d'une indication depuis le nœud de réseau radio (101) indiquant que le préambule d'accès aléatoire sans contention est désalloué.

3. Nœud de réseau radio (101) d'un système de communication sans fil configuré pour permettre un accès aléatoire d'un dispositif sans fil (103) étant en mode connecté dans une cellule, le nœud de réseau radio (101) étant configuré pour desservir la cellule, le nœud de réseau radio (101) étant configuré en outre pour :
- allouer un préambule d'accès aléatoire sans contention au dispositif sans fil (103) et désallouer le préambule d'accès aléatoire sans contention après une période de temps couvrant une pluralité d'occasions d'accès aléatoire se présentant,
- transmettre un indicateur du préambule d'accès aléatoire sans contention au dispositif sans fil (103), pour une utilisation par le dispositif sans fil (103) pour mettre en œuvre un accès aléatoire dans la cellule lors d'une occasion d'accès aléatoire se présentant, l'accès aléatoire étant amorcé par le dispositif sans fil (103) lorsque des données sont disponibles au niveau du dispositif sans fil (103) pour transmission en liaison montante, et
- transmettre une valeur de temps définissant ladite période de temps au dispositif sans fil (103), et **caractérisé par** lorsque le préambule d'accès aléatoire sans contention est désalloué :
- transmettre une indication au dispositif sans fil (103) indiquant que le préambule d'accès aléatoire sans contention est désalloué.

4. Nœud de réseau radio (101) selon la revendication 3, dans lequel le préambule d'accès aléatoire sans contention est valide pour au moins l'un des suivants : un sous-ensemble des ressources de radiofréquence de la pluralité d'occasions d'accès aléatoire se présentant, et un sous-ensemble de la pluralité d'occasions d'accès aléatoire se présentant.

5. Nœud de réseau radio (101) selon l'une quelconque des revendications 3 ou 4, le nœud de réseau radio (101) étant configuré en outre pour :
- désallouer le préambule d'accès aléatoire sans contention lorsque le dispositif sans fil (103) est transféré vers une autre cellule ou passe du mode connecté au mode inactif.

6. Nœud de réseau radio (101) selon l'une quelconque des revendications 3 à 5, le nœud de réseau radio (101) étant configuré en outre pour :
- recevoir des informations indiquant que le dispositif sans fil (103) est un candidat pour utiliser des préambules d'accès aléatoire sans contention, et
- allouer le préambule d'accès aléatoire sans contention au dispositif sans fil (103) sur la base des informations reçues.

7. Nœud de réseau radio (101) selon la revendication 6, dans lequel le nœud de réseau radio (101) est configuré pour recevoir les informations indiquant que le dispositif sans fil (103) est un candidat pour utiliser des préambules d'accès aléatoire sans contention depuis au moins l'un parmi :
- un nœud de réseau central (102) connecté au nœud de réseau radio (101), et
- le dispositif sans fil (103).

8. Nœud de réseau radio (101) selon l'une quelconque des revendications 6 ou 7, dans lequel le nœud de réseau radio (101) est configuré pour recevoir les informations indiquant que le dispositif sans fil (103) est un candidat pour utiliser des préambules d'accès aléatoire sans contention en réponse à une demande provenant du nœud de réseau radio (101).

9. Nœud de réseau radio (101) selon l'une quelconque des revendications 3 à 8, dans lequel le nœud de réseau radio (101) est configuré pour allouer le préambule d'accès aléatoire sans contention sur la base d'une disponibilité de préambules d'accès aléatoire sans contention dans la cellule.

10. Dispositif sans fil (103) configuré pour permettre un accès aléatoire lorsqu'il est en mode connecté dans une cellule desservie par un nœud de réseau radio (101) d'un système de communication sans fil, le dispositif sans fil (103) étant configuré en outre pour :
- recevoir un indicateur d'un préambule d'accès aléatoire sans contention depuis le nœud de réseau radio (101), le préambule d'accès aléatoire sans contention étant alloué pour une utilisation par le dispositif sans fil (103) pour mettre en œuvre un accès aléatoire dans la cellule lors d'une occasion d'accès aléatoire se présentant, l'accès aléatoire étant amorcé par le dispositif sans fil (103) lorsque des données sont disponibles au niveau du dispositif sans fil pour transmission en liaison montante ;
- recevoir une valeur de temps depuis le nœud de réseau radio (101) définissant une période de temps couvrant une pluralité d'occasions d'accès aléatoire se présentant après laquelle le préambule d'accès aléatoire sans contention est désalloué, et **caractérisé en ce que** le dispositif sans fil est en outre configuré pour
- recevoir une indication depuis le nœud de réseau radio (101) indiquant que le préambule d'accès aléatoire sans contention est désalloué.

11. Dispositif sans fil (103) selon la revendication 10, le dispositif sans fil (103) étant configuré en outre pour :
- recevoir des données pour transmission en liaison montante, et à moins que le préambule d'accès aléatoire sans contention n'ait été désalloué, le dispositif sans fil (103) étant configuré en outre pour :
- amorcer un accès aléatoire dans la cellule en utilisant le préambule d'accès aléatoire sans contention en réponse à la réception des données.

12. Dispositif sans fil (103) selon la revendication 11, dans lequel le dispositif sans fil (103) est configuré pour amorcer l'accès aléatoire si un temporisateur d'avance de temporisation du dispositif sans fil (103) a expiré.

13. Dispositif sans fil (103) selon l'une quelconque des revendications 10 à 12, le dispositif sans fil (103) étant configuré en outre pour :
- transmettre des informations au nœud de réseau radio (101) indiquant que le dispositif sans fil (103) est un candidat pour utiliser des préambules d'accès aléatoire sans contention, et
- recevoir l'indicateur du préambule d'accès aléatoire sans contention en réponse aux informations transmises.
